Europäisches Patentamt

European Patent Office

Office européen des brevets

(19)

(11) Veröffentlichungsnummer : **0 304 427 B1**

(12) **EUROPÄISCHE PATENTSCHRIFT**

(45) Veröffentlichungstag der Patentschrift :
14.08.91 Patentblatt 91/33

(51) Int. Cl.$^5$ : **B01D 61/00**

(21) Anmeldenummer : 87903290.2

(22) Anmeldetag : 01.05.87

(86) Internationale Anmeldenummer :
PCT/EP87/00232

(87) Internationale Veröffentlichungsnummer :
WO 87/06491 05.11.87 Gazette 87/24

(54) VERFAHREN ZUR ENTPHENOLUNG VON ABWÄSSERN AUS KOKEREIEN.

(30) Priorität : 03.05.86 DE 3615132

(43) Veröffentlichungstag der Anmeldung :
01.03.89 Patentblatt 89/09

(45) Bekanntmachung des Hinweises auf die
Patenterteilung :
14.08.91 Patentblatt 91/33

(84) Benannte Vertragsstaaten :
BE DE FR GB IT NL SE

(56) Entgegenhaltungen :
DE-A- 3 219 701
DE-A- 3 423 798
DE-A- 3 532 390

(56) Entgegenhaltungen :
Journal of the Water Pollution Control Federation, Band 51, Nr.11, November 1979, Washington D.C., US; S.L. Klemetson et al.:"Filtration of phenolic compounds in coals gasification wastewater", Seiten 2752-2763
Industrial and Engineering Chemistry, Process Design and Development, Band 22, Nr. 3, 1983, American Chemical Society, Columbus, Ohio, US; J.R. Campbell et al.:"Demineralization for reuse of coal conversion condensates", Seiten 496-503
Chemical Abstracts, Band 86, Nr. 24, 12. Juni 1977, Columbus, Ohio, US; Yu. I. Dytnerskii et al.:"Membrane methods of solution separation and their possible use in by-product coke manufacture"

(73) Patentinhaber : Bergwerksverband GmbH
Franz-Fischer-Weg 61
W-4300 Essen 13 (DE)

(72) Erfinder : POLLERT, Georg
Hülsebergstr. 11
W-4300 Essen 14 (DE)

## Beschreibung

Die Erfindung betrifft ein Verfahren zur Entphenolung von Abwässern aus Kokereien.

Bei der Verkokung von Kohle fallen im allgemeinen pro Tonne Kohle ca. 140 l Kohlewasser an, und zwar etwa 100 l aus der Kohlenfeuchte sowie 40 l aus chemischen Reaktionen beim Verkokungsprozeß, die mit dem Gas über Steigrohr und Vorlage den Ofen verlassen. Außerdem werden beim Verkokungsprozeß noch Teer, Benzol und in Wasser lösliche Substanzen wie z. B. Ammoniak, Ammoniumchlorid, Schwefelwasserstoff und Phenole gebildet und mit dem Gas aus dem Ofen ausgebracht.

Das bei der Gaskühlung auskondensierte Kohlewasser und zusätzlich bei der Gasreinigung anfallende Waschwässer und Dampfkondensate müssen von ihren Inhaltsstoffen weitgehend befreit werden, bevor sie abgeleitet oder als Brauchwasser wiederverwendet werden können.

Eine Möglichkeit der Reinigung dieser Wässer stellt die Behandlung in einer Umkehr-Osmose-Anlage dar DE-A-3219701). Dabei fällt, falls nicht ein Entphenolungsschritt vorgeschaltet wird, ein mit Phenolen hoch angereichertes Konzentrat an, das weiterbehandelt werden muß. Zur Entfernung der Phenole aus diesem Konzentrat kann nun ein konventionelles Extraktionsverfahren wie z. B. die Entphenolung mit Benzol nach Pott-Hilgenstock oder mit einem Estergemisch nach dem Phenosolvan-Verfahren angewandt werden (O. Grosskinsky, "Handbuch des Kokereiwesens", Band II, Karl-Knapp-Verlag, Düsseldorf 1958, S. 346-353). Das ist aber trotz des erheblich verminderten Volumens des Konzentrates mit großem technischen Aufwand und hohen Kosten verbunden, da das Extraktionsmittel seinerseits wieder extrahiert (Pott-Hilgenstock) oder destilliert (Phenosolvan-Verfahren) werden muß.

Der Erfindung liegt die Aufgabe zugrunde, die bei der Entphenolung bisher notwendige Aufarbeitung des Extraktionsmittels überflüssig zu machen.

Diese Aufgabe wird durch eine Kombination gelöst, indem man

a) die Abwässer in eine Umkehr-Osmose-Anlage führt,

b) das Konzentrat der Umkehr-Osmose-Anlage mit dem in der Kokerei anfallenden Teer vermischt,

c) die Mischung einer Phasentrennung unterwirft und

d) den mit Phenol beladenen Teer einer Teerdestillationsanlage zuführt.

Weitere Ausgestaltungen und Verbesserungen erfolgen gemäß den Merkmalen der Unteransprüche.

Durch die Anwendung der Umkehr-Osmose fällt ein mit Phenolen hoch angereichertes Konzentrat an. Wird dieses Konzentrat mit dem in der Kokerei anfallenden Teer vermischt, wird der Phenolgehalt des Konzentrates nach dem Nernst'schen Verteilungsgesetz reduziert und entsprechend im Teer erhöht. Gemäß diesem Gesetz verteilt sich ein Stoff zwischen zwei Phasen in einem konstanten Verhältnis. Auf diese Weise kann das gesamte im Wasser enthaltene Phenol über den Teer aus der Kokerei entsorgt werden.

Die überführung des im Kokereiwasser enthaltenen Phenols in den Kokereiteer ist deswegen von besonderem Vorteil, weil der Teer ohnehin Phenole enthält, die in einer Teerdestillationsanlage aus dem Teer gewonnen werden. Es wird also kein zusätzlicher Verfahrensschritt notwendig, um das aus dem Kokereiwasser in den Teer überführte Phenol zu gewinnen, lediglich die Phenolmenge im Teer wird erhöht.

Gemäß Anspruch 2 wird das Konzentrat aus der Umkehr-Osmose-Anlage in einer Flüssig-Flüssig-Extraktionsapparatur mit Kokereiteer entphenolt.

Gemäß Anspruch 3 kann das Konzentrat in den unteren Teil des Teerscheiders geleitet werden. Durch diese Verfahrensführung wird das Phenol direkt in den entgegenströmenden Teer überführt. Das entfernte Phenol gelangt somit nicht in das Vorlagenkreislaufwasser. Dadurch wird die Umkehr-Osmose-Anlage entlastet. In dem Teerscheider kann jedoch eine Gleichgewichtseinstellung zwischen Teer und Konzentrat nicht erreicht werden.

Falls entsprechend dem Anspruch 4 das Konzentrat der Umkehr-Osmose-Anlage in den Vorlagenkreislauf geleitet wird, erhöht sich im Vorlagenkreislaufwasser die Phenolkonzentration. Durch den innigen Kontakt zwischen Vorlagenkreislaufwasser und Teer reichert sich das Phenol gemäß dem Nernst'schen Verteilungsgesetz im gleichen Verhältnis im Teer an. Das führt dazu, daß mit dem kontinuierlich aus dem Vorlagenkreislauf abgezogenen Teer das gesamte beim Verkokungsprozeß gebildete Phenol aus dem Bereich der Kokerei-Nebengewinnungsanlagen ausgeschleust wird. Diese Verfahrensweise hat den Vorteil, daß die überführung des Phenols in den Teer ohne apparativen Aufwand erfolgt.

Um eine zu starke Erhöhung des Gehalts an fixen Ammoniumsalzen im Wasser, das der Umkehr-Osmose-Anlage zugeführt wird, zu vermeiden, kann das Konzentrat der Umkehr-Osmose-Anlage entsprechend Anspruch 5 eingedampft werden. Das Kondensat aus dem Eindampfungsprozeß wird gemäß den Ansprüchen 2, 3 oder 4 weiterbehandelt.

Es besteht allerdings auch die Möglichkeit, gemäß Patentanmeldung DE-A-3423798.4 die fixen Salze im Vorlagenkreislauf anzureichern und das nahezu salzfreie Kondensat des Vorkühlers in die Umkehr-Osmose-Anlage einzuspeisen (Beispiel 2). Diese Vorgehensweise hat den Vorteil, daß in der Umkehr-Osmose-Anlage der Konzentratanfall stark vermindert wird.

Anhand der Zeichnung und der Beispiele sei die Erfindung näher beschrieben.

Die Zeichnung zeigt in der

Fig. 1     eine schematische Darstellung der Verfahrensführung, in

Fig. 2     eine schematische Darstellung der Verfahrensführung, bei der das Konzentrat der Umkehr-Osmose-Anlage in eine Flüssig-Flüssig-Extraktionsanlage geleitet wird, in

Fig. 3     eine schematische Darstellung der Verfahrensführung, bei der das Konzentrat der Umkehr-Osmose-Anlage in den unteren Teil des Teerscheiders geleitet wird und in

Fig. 4     eine schematische Darstellung der Verfahrensführung, bei der das Konzentrat der Umkehr-Osmose-Anlage in den Vorlagenkreislauf geleitet wird.

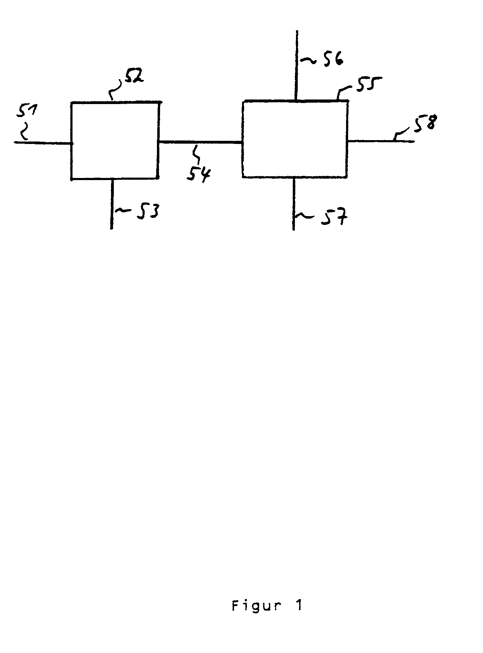

Aus Fig. 1 geht hervor, daß die Abwässer einer Kokerei durch eine Leitung 51 in eine Umkehr-Osmose-Anlage 52 geleitet werden. Durch Leitung 53 tritt das Permeat aus, das als Brauchwasser wiederverwendet werden kann. Das Konzentrat wird durch eine Leitung 54 in einen Mischbehälter 55 geleitet, in dem durch eine Leitung 56 der in der Kokerei anfallende Teer geführt wird. Der mit Phenol beladene Teer verläßt den Mischbehälter 55 durch eine Leitung 57. Das vom größten Teil seiner Phenole befreite Konzentrat wird über eine Leitung 58 in den Vorlagenkreislauf geführt.

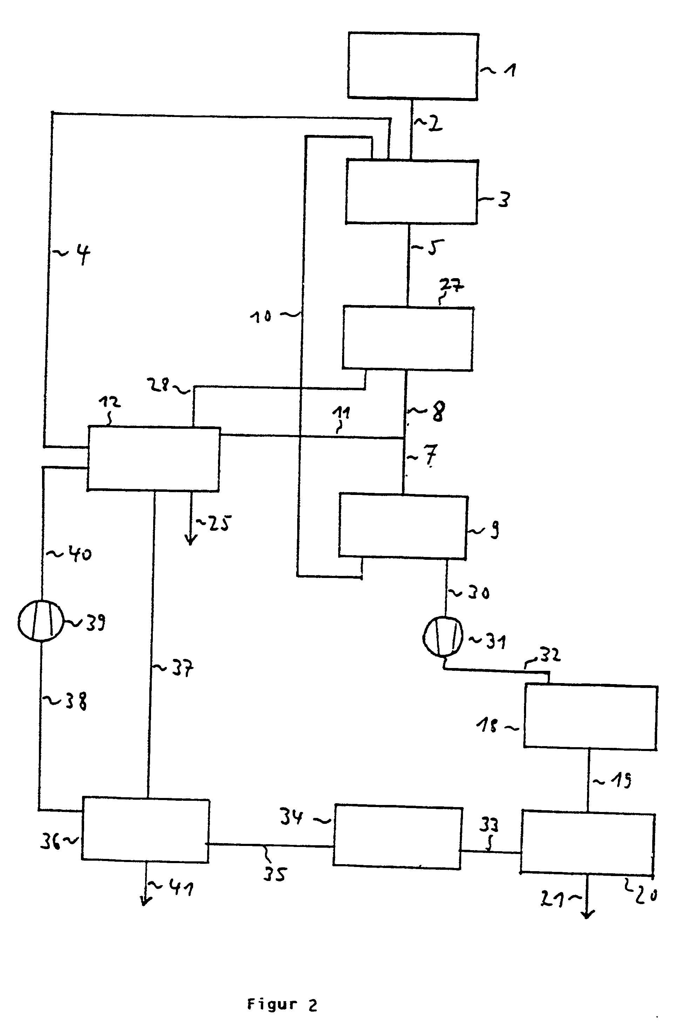

Die Fig. 2, 3 und 4 werden in den Beispielen 1, 2 und 3 erläutert.

Beispiel 1 (Fig. 2)

Bei der Verkokung von stündlich 215 t Kohle in den Koksöfen 1 gelangen 70.000 m³ (i.N.) Gas, 7,5 t Teer, 30 t Wasserdampf sowie 285 kg Phenole pro Stunde über das Steigrohr 2 in die Vorlage 3, in der das Gas durch Vorlagenberieselungswasser aus Leitung 4 auf ca. 80°C gekühlt wird. Dabei wird ein großer Teil des Teeres abgeschieden. Anschließend gelangt das Gas über Leitung 5 in das Elektro-Filter 27, in dem der noch im Gas verbliebene Teer sowie die vom Gas mitgerissenen fixen Ammoniumsalze abgeschieden werden. Der Elektro-Filter-Ablauf wird über Leitung 28 in den Teerscheider 12 geführt. über Leitung 8 und 7 gelangt das Gas in den Vorkühler 9, in dem der Wasserdampf auskondensiert wird. Während das überschüssige Kondensat über Leitung 10 auf die Vorlage 3 geleitet wird, werden über Leitung 30, Pumpe 31 und Leitung 32 stündlich 34 m³ Vorkühlerkondensat mit einem Phenolgehalt von 2 g/l in das Vorreinigungssystem 18 und über Leitung 19 in die Umkehr-Osmose-Anlage 20 gepumpt. Hier werden stündlich 30 m³ Brauchwasser gewonnen, die die Anlage über Leitung 21 verlassen. 4 m³ Konzentrat mit einem Phenolgehalt von 17 g/l werden pro Stunde über Leitung 33, Wärmetauscher 34 und Leitung 35 in die Flüssig-Flüssig-Extraktionsapparatur 36 geführt, in die im Gegenstrom stündlich 7,5 t Teer mit einem Phenolgehalt von 30,3 g/kg aus dem Teerscheider 12 über Leitung 37 geleitet werden. Die Extraktionstemperatur beträgt ca. 70°C. Vom Kopf des Flüssig-Flüssig-Extraktionsapparates 36 werden stündlich 4 m³ Wasser mit einem Phenolgehalt von 2,5 g/l über Leitung 38, Pumpe 39 und Leitung 40 in den Teerscheider 12 gepumpt, während vom Sumpf des Flüssig-Flüssig-Extraktionsapparates 36 stündlich über Leitung 41 7,5 t Teer mit einem Phenolgehalt von 38 g/kg abgezogen werden.

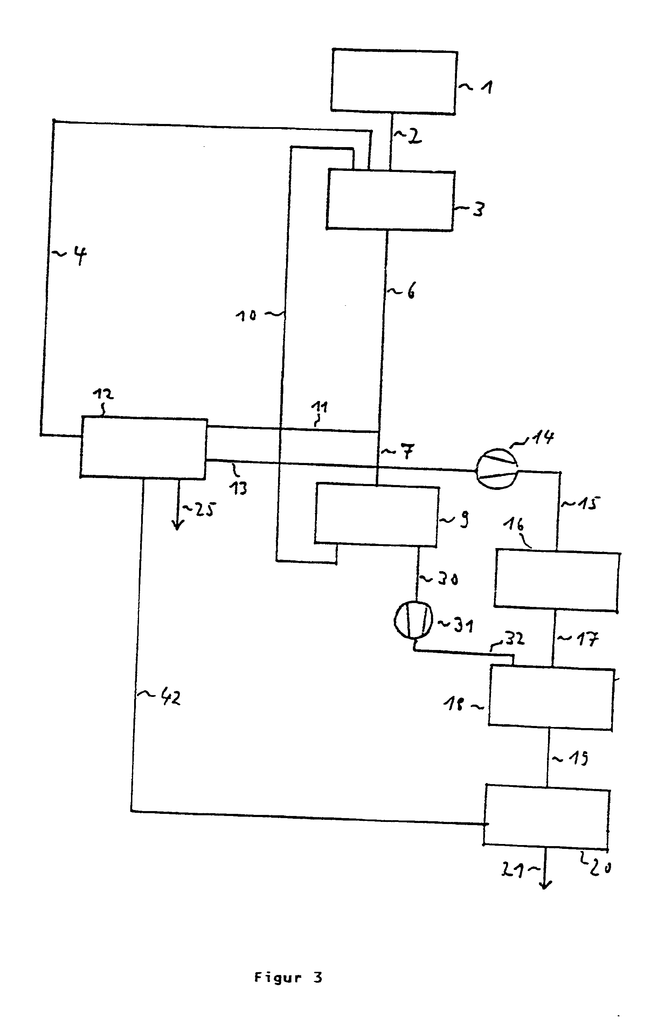

Beispiel 2 (Fig. 3)

In den Koksöfen 1 werden 215 t Kohle/h verkokt. Stündlich gelangen 70.000 m³ (i.N.) Gas mit 7,5 t Teer, 30 t Wasserdampf sowie 285 kg Phenole über das Steigrohr 2 in die Vorlage 3, in der das Gas durch Vorlagenberieselungswasser aus Leitung 4 gekühlt wird. Dabei wird ein großer Teil des Teeres abgeschieden. Anschließend gelangt das Gas über Leitung 6 und 7 in den Vorkühler 9, in dem der Wasserdampf auskondensiert und der größte Teil des noch im Gas verbliebenen Teeres abgeschieden wird. Teer und Wasser gelangen über Leitung 10 auf die Vorlage 3 zurück. Das nicht verdampfte Vorlagenberieselungswasser und der abgeschiedene Teer gelangen über Leitung 11 in den Teerscheider 12. über Leitung 13, Pumpe 14 und Leitung 15 werden stündlich 40 m³ Wasser mit einem Phenolgehalt von 3,5 g/l aus dem Teerscheider 12 in den Kühler 16 gepumpt, in dem es von ca. 70°C auf 30°C abgekühlt wird. Vom Kühler 16 aus wird das Wasser über die Leitung 17, das Vorreinigungssystem 18 sowie Leitung 19 in die Umkehr-Osmose-Anlage 20 geführt. Hier werden stündlich 30 m³ Brauchwasser gewonnen, die die Anlage durch Leitung 21 verlassen. 10 m³ Konzentrat mit eine Phenolgehalt von 14 g/l werden pro Stunde über Leitung 42 in den unteren Teil des Teerscheiders 12 geführt. Das Konzentrat steigt im Teerscheider 12 durch den Teer nach oben bis in die wäßrige Phase und gibt dabei stündlich 90 kg Phenol an den Teer ab. Der Phenolgehalt des Teeres, der im Gegenstrom nach unten sinkt und kontinuierlich über Leitung 25 abgezogen wird, nimmt dabei von 26 auf 38 g/kg zu. Bei seinem Eintritt in die wäßrige Phase des Teerscheiders 12 besitzt das Konzentrat noch einen Restgehalt von 5 g Phenol/l.

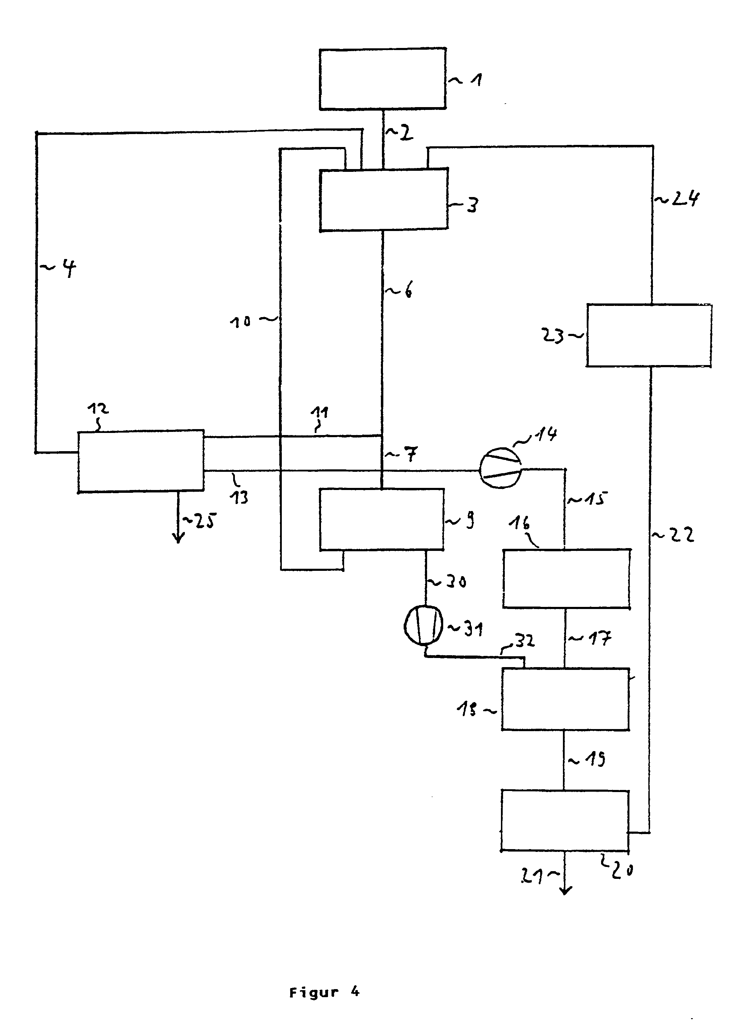

Beispiel 3(Fig. 4)

In den Koksöfen 1 werden 215 t Kohle/h verkokt. Stündlich gelangen 70.000 m³ (i.N.) Gas mit 7,5 t Teer, 30 t Wasserdampf sowie 285 kg Phenolen über das Steigrohr 2 in die Vorlage 3, in der das Gas durch Vorlagenberieselungswasser aus Leitung 4 gekühlt wird. Dabei wird ein großer Teil des Teeres abgeschieden. Anschließend gelangt das Gas über Leitung 6 und 7 in den Vorkühler 9, in dem der Wasserdampf auskondensiert und der größte Teil des noch im Gas verbliebenen Teeres abgeschieden wird. Teer und Wasser gelangen über Leitung 10 auf die Vorlage 3 zurück. Das nicht verdampfte Vorlagenberieselungswasser und der abgeschiedene Teer gelangen über Leitung 11 in den Teerscheider 12. über Leitung 13, Pumpe 14 und Leitung 15 werden stündlich 45 m³ Wasser mit einem Phenolgehalt von 5 g/l aus dem Teerscheider 12 in den Kühler 16 gepumpt, in dem es von ca. 70 C auf 30 °C abgekühlt wird. Vom Kühler 16 aus wird das Wasser über Leitung 17, das Vorreinigungssystem 18 sowie Leitung 19 in die Umkehr-Osmose-Anlage 20 geführt. Hier werden stündlich 30 m³ Brauchwasser gewonnen, die die Anlage durch Leitung 21 verlassen. 15 m³ Konzentrat mit einem Phenolgehalt von 15 g/l werden pro Stunde über Leitung 22 dem Verdampfer 23 zugeführt, in dem die fixen Ammoniumsalze gewonnen werden. Das dabei anfallende Kondensat wird über Leitung 24 in die Vorlage 3 zurückgeführt. über Leitung 25 werden stündlich 7,5 t Teer mit einem Phenolgehalt von 38 g/kg aus dem Teerscheider 12 abgezogen.


## Patentansprüche

1. Verfahren zur Entphenolung von Abwässern aus Kokereien, dadurch gekennzeichnet, daß man
a) die Abwässer in eine Umkehr-Osmose-Anlage führt,
b) das Konzentrat der Umkehr-Osmose-Anlage mit dem in der Kokerei anfallenden Teer vermischt,
c) die Mischung einer Phasentrennung unterwirft und
d) den mit Phenol beladenen Teer einer Teerdestillationsanlage zuführt.

2. Verfahren zur Entphenolung von Abwässern aus Kokereien nach Anspruch 1, dadurch gekennzeichnet, daß man die Vermischung des Konzentrats der Umkehr-Osmose-Anlage mit dem in der Kokerei anfallenden Teer und die Phasentrennung der Mischung (Schritte b) und c)) in einer Flüssig-Flüssig-Extraktionsapparatur vornimmt.

3. Verfahren zur Entphenolung von Abwässern aus Kokereien nach Anspruch 1, dadurch gekennzeichnet, daß man die Vermischung des Konzentrats der Umkehr-Osmose-Anlage mit dem in der Kokerei anfallenden Teer und die Phasentrennung der Mischung (Schritte b) und c)) im unteren Teil eines Teerscheiders vornimmt.

4. Verfahren zur Entphenolung von Abwässern aus Kokereien nach Anspruch 1, dadurch gekennzeichnet, daß man die Vermischung des Konzentrats der Umkehr-Osmose-Anlage mit dem in der Kokerei anfallenden Teer und die Phasentrennung der Mischung (Schritte b) und c)) in einem Vorlagenkreislauf vor einem Teerscheider vornimmt.

5. Verfahren nach einem der Ansprüche 1 bis 4, dadurch gekennzeichnet, daß das Konzentrat der Umkehr-Osmose-Anlage vor der Entphenolung durch einen Verdampfer geleitet wird und die im Konzentrat enthaltenen Salze entfernt werden.


## Claims

1. A method of dephenolising effluent from coking plant, characterised in that
a) the effluent is passed into a reverse osmosis installation,
b) the concentrate of the reverse osmosis installation is mixed with the tar obtained in the coking plant,
c) the mixture is subjected to a phase separation and
d) the tar loaded with phenol is fed to a tar distillation installation.

2. A method of dephenolising effluent from coking plant according to claim 1, characterised in that the mixing of the concentrate of the reverse osmosis installation with the tar obtained in the coking plant and the phase separation of the mixture (steps b) and c)) are carried out in a liquid-liquid extraction apparatus.

3. A method of dephenolising effluent from coking plant according to claim 1, characterised in that the mixing of the concentrate of the reverse osmosis installation with the tar obtained in the coking plant and the phase separation of the mixture (steps b) and c)) are carried out in the lower part of a tar separator.

4. A method of dephenolising effluent from coking plant according to claim 1, characterised in that the mixing of the concentrate of the reverse osmosis installation with the tar obtained in the coking plant and the phase separation of the mixture (steps b) and c)) are carried out in a collecting circuit in front of a tar separator.

4

5. A method according to any one of claims 1 to 4, characterised in that, before dephenolisation, the concentrate of the reverse osmosis installation is passed through a vaporiser and the salts contained in the concentrate are removed.

## Revendications

1. Procédé de déphénolation d'eaux résiduaires de cokeries, caractérisé en ce que
a) on introduit l'eau résiduaire dans une installation à osmose inverse,
b) on mélange le concentré issu de l'installation à osmose inverse au goudron présent dans la cokerie,
c) on soumet le mélange à une séparation de phases et
d) on envoie le goudron chargé de phénol à une installation de distillation du goudron.

2. Procédé de déphénolation d'eaux résiduaires de cokeries selon la revendication 1, caractérisé en ce que l'on entreprend le mélange du concentré issu de l'installation à osmose inverse au goudron présent dans la cokerie et la séparation des phases du mélange [étapes b) et c)] dans un appareil d'extraction liquide-liquide.

3. Procédé de déphénolation d'eaux résiduaires de cokeries selon la revendication 1, caractérisé en ce que l'on entreprend le mélange du concentré issu de l'installation à osmose inverse au goudron présent dans la cokerie et la séparation des phases du mélange [étapes b) et c)] dans la partie inférieure d'un séparateur de goudron.

4. Procédé de déphénolation d'eaux résiduaires de cokeries selon la revendication 1, caractérisé en ce que l'on entreprend le mélange du concentré issu de l'installation à osmose inverse au goudron présent dans la cokerie et la séparation des phases du mélange [étapes b) et c)] dans un circuit préliminaire monté en amont d'un séparateur de goudron.

5. Procédé suivant l'une quelconque des revendications 1 à 4, caractérisé en ce que l'on fait passer le concentré issu de l'installation à osmose inverse par un évaporateur avant d'entreprendre la déphénolation et on élimine les sels que le concentré contient.

Figur 1

Figur 2

Figur 3

Figur 4